**Europäisches Patentamt**

(19) **European Patent Office**

**Office européen des brevets**

(11) Veröffentlichungsnummer: **0 083 358**
**B1**

(12) **EUROPÄISCHE PATENTSCHRIFT**

(45) Veröffentlichungstag der Patentschrift:
16.10.85

(51) Int. Cl.⁴: **H 01 M 2/36**

(21) Anmeldenummer: **82902172.4**

(22) Anmeldetag: **13.07.82**

(86) Internationale Anmeldenummer:
**PCT/EP 82/00150**

(87) Internationale Veröffentlichungsnummer:
**WO 83/00260 (20.01.83** Gazette 83/2)

(54) **AUTOMATISCHE EINFÜLLVORRICHTUNG FÜR BATTERIEZELLEN.**

(30) Priorität: **13.07.81 DE 3127619**

(43) Veröffentlichungstag der Anmeldung:
**13.07.83 Patentblatt 83/28**

(45) Bekanntmachung des Hinweises auf die Patenterteilung:
**16.10.85 Patentblatt 85/42**

(84) Benannte Vertragsstaaten:
**AT BE CH DE FR GB LI LU NL SE**

(56) Entgegenhaltungen:
**FR - A - 411 949**
**FR - A - 2 293 802**
**FR - A - 2 491 969**
**GB - A - 333 291**
**US - A - 1 416 496**
**US - A - 1 471 362**
**US - A - 1 942 908**

(73) Patentinhaber: **OSCHMANN, Klaus, Mitterweg 9,
D-8066 Feldgeding (DE)**

(72) Erfinder: **OSCHMANN, Klaus, Mitterweg 9,
D-8066 Feldgeding (DE)**

(74) Vertreter: **Gustorf, Gerhard, Dipl.-Ing., Mühlenstrasse 1,
D-8300 Landshut (DE)**

## Beschreibung

Die Erfindung betrifft eine Vorrichtung zum automatischen Einfüllen von Wasser in Batteriezellen mit einem in die Zelle einsetzbaren Einfüllstopfen, der einen Anschlussstutzen für die Wasserzuführung sowie ein von einem Schwimmer betätigtes Ventil aufweist, dessen Ventilkörper über einen schwenkbar gelagerten Hebel mit dem zentrisch im Stopfengehäuse angeordneten Schwimmer verbunden ist.

Durch die Belastung von Batterien, beispielsweise die zyklischen Belastungen von Antriebsbatterien für Fahrzeuge, Gabelstapler usw., wird das Wasser in der verdünnten Schwefelsäure in den Batteriezellen verbraucht. Um zu verhindern, dass der Elektrolytspiegel in den einzelnen Batteriezellen unter ein Mindestmass absinkt, müssen die Batterien in regelmässigen Zeitabständen kontrolliert werden, damit chemisch reines Wasser rechtzeitig nachgefüllt wird.

Zur Vermeidung eines arbeits- und zeitaufwendigen Nachfüllens von Hand sind bereits Vorrichtungen der eingangs erläuterten Bauart bekannt, die automatisch arbeiten. Hierzu sind die Anschlussstutzen der Einfüllstopfen der einzelnen Batteriezellen über eine gemeinsame Leitung mit einem zentralen Wasserbehälter verbunden, aus dem das Wasser mit Hilfe eines Druckerzeugers in die Batteriezellen geleitet wird. Wenn beim Nachfüllen der erforderliche Elektrolytspiegel wieder erreicht ist, schliesst der Schwimmer das Ventil der entsprechenden Batteriezellen.

Eine Vorrichtung der eingangs erläuterten Bauart ist in der US-A-1 942 908 beschrieben und dargestellt. Dabei ist der Schwimmer mit seitlichem Spiel in eine Öffnung der Batteriezelle eingesetzt. Dieses Spiel zwischen der Öffnungswandung und dem Schwimmer muss dabei verhältnismässig gross sein, um den Durchfluss der Flüssigkeit in die Batteriezelle zu ermöglichen; aufgrund des Fehlens weiterer Führungen ist dabei die Gefahr sehr gross, dass sich der Schwimmer verkantet. Hinzu kommt, dass an dem Schwimmer aussermittig eine Stange befestigt ist, die an einem Hebel angelenkt ist; das andere Ende des schwenkbar gelagerten Hebels betätigt den Ventilkörper. Der Beschreibung sind keine Angaben über das Übersetzungsverhältnis des Hebels zu entnehmen. In der Zeichnung ist jedoch zu erkennen, dass dieses Übersetzungsverhältnis unwesentlich grösser als 1 : 1 und kleiner als 1 : 2 ist.

Diese bekannte Konstruktion hat damit den Nachteil, dass Niveauschwankungen, beispielsweise im Fahrbetrieb, vom Schwimmer über den schwenkbaren Hebel nahezu unverringert auf den Ventilkörper übertragen werden, so dass dieser sich ständig öffnet und schliesst. Bei angeschlossener Nachfüllvorrichtung läuft daher ständig Flüssigkeit in die Batteriezelle nach, was zu einem unerwünschten Überlaufen und einem Verschmutzen der Batterieoberseite führt. Aufgrund der fehlenden Führung des Schwimmers kann dieser bei den erwähnten, heftigen Bewegungen verklemmen, so dass dann die Einfüllöffnung ständig offen bleibt.

Das geringe Übersetzungsverhältnis zwischen dem Schwimmer und dem Ventilkörper hat ferner den Nachteil, dass der Schwimmer verhältnismässig gross ausgeführt sein muss, damit die Auftriebskraft des Schwimmers ausreicht, das Ventil bei erreichtem Sollstand des Elektrolytspiegels sicher geschlossen zu halten.

Bei einer durch die FR-A-2 293 802 bekanntgewordenen Vorrichtung ist der Schwimmer fest an einem Hebel angebracht, an dessen anderem Ende der Ventilkörper lose angelenkt ist. Das Übersetzungsverhältnis dieser Hebels liegt ebenfalls in der Grössenordnung von 1 : 1. Diese bekannte Konstruktion hat ausserdem den Nachteil, dass der Schwimmer nicht zentrisch im Stopfengehäuse angeordnet ist, sondern ausserhalb von diesem, was die Baumasse der Vorrichtung nachteilig beeinflusst und den Einbau in die Batteriezelle erheblich erschwert.

Zum Stand der Technik zählen weiterhin Vorrichtungen, wie sie etwa in der US-A-1 471 362 gezeigt sind. Bei dieser bekannten Vorrichtung ist der Schwimmer mittels eines Verbindungsblockes mit einem zentrisch gelagerten Übertragungshebel verbunden, welcher ohne Verstärkung der Schwimmerkraft den Ventilkörper öffnet; der Ventilkörper wird dabei durch eine Feder in seiner Schliessstellung gehalten. Der Aussendurchmesser des Verbindungsblockes ist dabei etwas kleiner als der Innendurchmesser des Ventilgehäuses, das mit seiner Innenwand eine Führungsfläche für den Verbindungsblock bildet, die sich über die gesamte Länge der Innenwand erstreckt. Diese Art der Schwimmerführung ist äusserst anfällig gegen Verstopfungen, denn die in der verdünnten Schwefelsäure der Batteriezelle immer vorhandenen Schwebeteilchen können in die verhältnismässig lange Gleitführung gelangen, wodurch diese schwergängig wird, so dass ein ordnungsgemässes Öffnen und Schliessen des Ventils nicht mehr gewährleistet sind. Das hat zur Folge, dass der betroffene Einfüllstutzen ausgebaut und gereinigt werden muss, ganz abgesehen davon, dass beim unterbliebenen Schliessen des Ventils Wasser auslaufen kann. Auf diese Weise werden die Vorteile des automatischen Nachfüllens gegenüber dem manuellen Nachfüllen zunichte gemacht.

Der Erfindung liegt die Aufgabe zugrunde, die gattungsgemässe Vorrichtung so zu verbessern, dass der Schwimmer eine leichtgängige, gegen Verkantungen und Verstopfungen sichere Führung aufweist und dass selbst im Fall auftretender Schwergängigkeit der Schwimmerführung die vom Schwimmer aufgebrachte Kraft ausreicht, das Ventil sicher zu betätigten und Flatterbewegungen des Ventils zu verhindern.

Diese Aufgabe wird erfindungsgemäss dadurch gelöst, dass der Schwimmer an einer zentrischen Führungsstange befestigt ist, die zur alleinigen Gleitführung des Schwimmers mit Führungsspiel in einer zentrisch in den i.w. trichterförmig geneigten Boden des Stopfengehäuses eingearbeiteten Öffnung vertikal verschiebbar ist und die an ihrem oberen Ende gelenkig mit dem als Verstärkungshebel ausgebildeten Hebel zur Übertragung der Schwimmerbewegung auf den Ventilkörper verbunden ist.

Dadurch, dass der Schwimmer mit seiner Führungsstange zentrisch in einer Gleitführung im Boden des Stopfengehäuses gehalten wird, ist die Gefahr von Verkantungen des Schwimmers bei seinen Vertikalbewegungen ausgeschlossen. Diese Gleitführung kann so klein gehalten werden, dass Verklebungen oder Verstopfungen durch Schwebeteilchen im Elektrolyten weitestgehend verhindert werden. Durch die trichterförmige Neigung des Bodens wird ein Abfliessen des Wassers zu der zentrischen Öffnung begünstigt und eine grosse Führungslänge für die Führungsstange hergestellt.

In bevorzugter Weiterbildung der Erfindung ist vorgesehen, dass das Übersetzungsverhältnis von Führungsstange zum Verstärkungshebel in der Grössenordnung von 1 : 16 liegt. Das bedeutet, dass bei einem Schwimmergewicht von etwa 15 g die Auftriebskraft des Schwimmers auf eine Kraft zum Schliessen des Ventils von mehr als 200 Gramm verstärkt wird.

Gemäss einer weiteren Massnahme der Erfindung ist zur Kraftübertragung vom Verstärkungshebel auf den Ventilkörper am Verstärkungshebel eine im Stopfengehäuse gelagerte Welle befestigt, die mit einem Zahnsegment in eine Aussparung des Ventilkörperschaftes eingreift.

Auch diese Ausgestaltung trägt zu einer leichtgängigen Kraftübertragung bei, so dass ein sicheres Öffnen und Schliessen des Ventils ohne jede Verklemmungen gewährleistet sind.

Nach einem weiteren Merkmal der Erfindung ist der Ventilkörper in einem zylindrischen Einlassrohrstück des Stopfengehäuses angeordnet, das eine konische Sitzfläche für den Ventilkopf aufweist, an der dieser in Schliessstellung mittels eines O-Ringes dichtend anliegt. Vorzugsweise bildet dabei die konische Sitzfläche einen Winkel von 120°.

Diese Massnahmen haben bei der Verwirklichung der Erfindung gezeigt, dass sich bei einer Schliesskraft des Ventilkörpers von etwa 200 Gramm eine optimale Abdichtung einstellt; durch den am Ventilkopf anliegenden Wasserdruck von im allgemeinen 1,5 bis 2,0 bar wird diese Abdichtungswirkung noch begünstigt.

Gemäss der Erfindung ist ferner vorgesehen, dass in das Einlassrohrstück ein Drosselkanal für die Wasserzuführung eingearbeitet ist. Vorzugsweise liegt dabei zwischen dem Kanalausgang und dem Ventilkopf eine das auftreffende Wasser zur Wand des Einlassrohrstückes ablenkende Prallplatte.

Mit diesen Massnahmen wird erreicht, dass das zugeführte Wasser nicht mit dem vollen Druck und unmittelbar auf den Ventilkopf auftrifft, so dass unerwünschte Druckkräfte in Schliessrichtung des Ventils vermieden werden.

Diese vorteilhafte Wirkung wird dadurch noch verstärkt, dass der Kanalausgang trompetenförmig erweitert ist, weil dadurch die Durchströmgeschwindigkeit des zugeführten Wassers weiter herabgesetzt wird.

Um zu verhindern, dass mit dem zugeführten Wasser Schmutzteilchen in die Vorrichtung gelangen können, wo sie sich in den Gelenken und Führungen absetzen, ist zwischen den Kanalausgang und die Prallplatte ein Filter eingesetzt. Zu demselben Zweck ist um den Drosselkanal herum ein Schmutzsammelraum vorgesehen.

Für ein ungehindertes Abfliessen des zugeführten Wassers aus dem Stopfengehäuse in die Batteriezelle und zur Vermeidung eines Einklemmens von Fremdkörpern in der Gleitführung für die Führungsstange des Schwimmers sind in die Führungsstange Längsnuten eingearbeitet.

Nach einem weiteren Merkmal der Erfindung sind in den Boden des Stopfengehäuses feine, vorzugsweise sternförmige Durchbrüche eingearbeitet, die auf der Bodenoberseite wenigstens teilweise in Schmutzsammelräume münden und die an der Bodenunterseite scharfkantig begrenzt sind.

Durch diese Durchbrüche fliesst das restliche Wasser in die Batteriezellen, das nicht in den Längsnuten der Führungsstange abgeflossen ist. Die feinen Durchbrüche halten dabei möglicherweise noch vorhandene Schwebeteilchen zurück, die sich in den Schmutzsammelräumen absetzen, ohne in die Gleitführung zwischen der Führungsstange des Schwimmers und dem Boden des Stopfengehäuses gelangen zu können. Die scharfkantige Begrenzung der Durchbrüche an der Bodenunterseite hat den Vorteil, dass damit Abweiser geschaffen sind, die verhindern, dass Schmutzteilchen aus der Batteriezelle durch die Durchbrüche zurück in das Stopfengehäuse gelangen können. Ausserdem können durch die feinen Durchbrüche Gase oder Säuredampf in das Stopfengehäuse aufsteigen, ohne dass dabei Flüssigkeitsteilchen mitgenommen werden, so dass das getrocknete Gas durch Entlüftungsöffnungen im Stopfengehäuse nach aussen entweichen kann, ohne dass dabei die Aussenseite der Vorrichtung oder Batterie verschmutzt wird.

Der grossvolumige Schwimmer, der aus einem leichten Kunststoff hergestellt werden kann, kann so ausgebildet sein, dass an seiner Oberfläche ein tellerförmiger Raum zur Aufnahme von Wasser besteht. Die sich dadurch in dem tellerförmigen Raum bildende «Wasservorlage» sorgt dafür, dass trotz des geringen Gewichtes der Schwimmer bei sinkendem Elektrolytspiegel sicher heruntergezogen wird. Die zweite Funktion dieses tellerförmigen Raumes besteht darin, dass bei Funktionsstörungen aufgrund schwergängiger oder gar blockierter Führungen und Gelenke der Schwimmer vollständig von dem zugeführten Wasser überflutet wird, so dass die Wasservorlage neutralisiert und der Auftrieb erhöht wird.

Die Erfindung ist nachstehend an einem Ausführungsbeispiel erläutert, das in der Zeichnung dargestellt ist.

Es zeigen:

Fig. 1 eine perspektivische, teilweise aufgeschnittene Ansicht einer Vorrichtung gemäss der Erfindung,

Fig. 2 einen Längsschnitt durch die in Fig. 1 gezeigte Vorrichtung,

Fig. 3 eine schematische, vergrösserte Darstellung der Verbindung zwischen der Welle des Verstärkungshebels und dem Ventilkörper,

Fig. 4 einen vergrösserten Längsschnitt der Prallplatte und

Fig. 5 eine Seitenansicht der Führungsstange des Schwimmers.

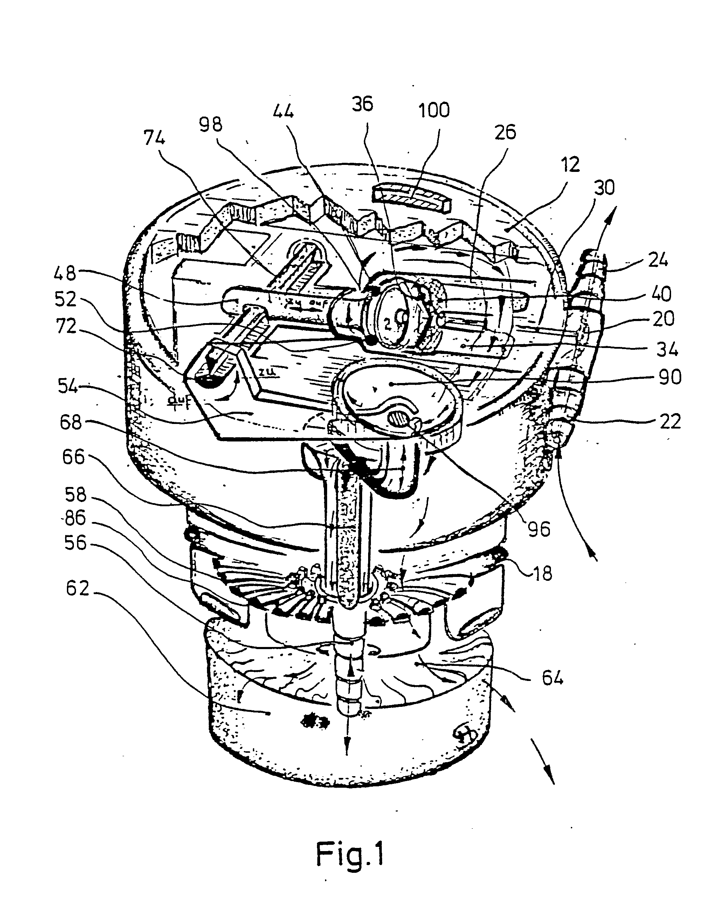

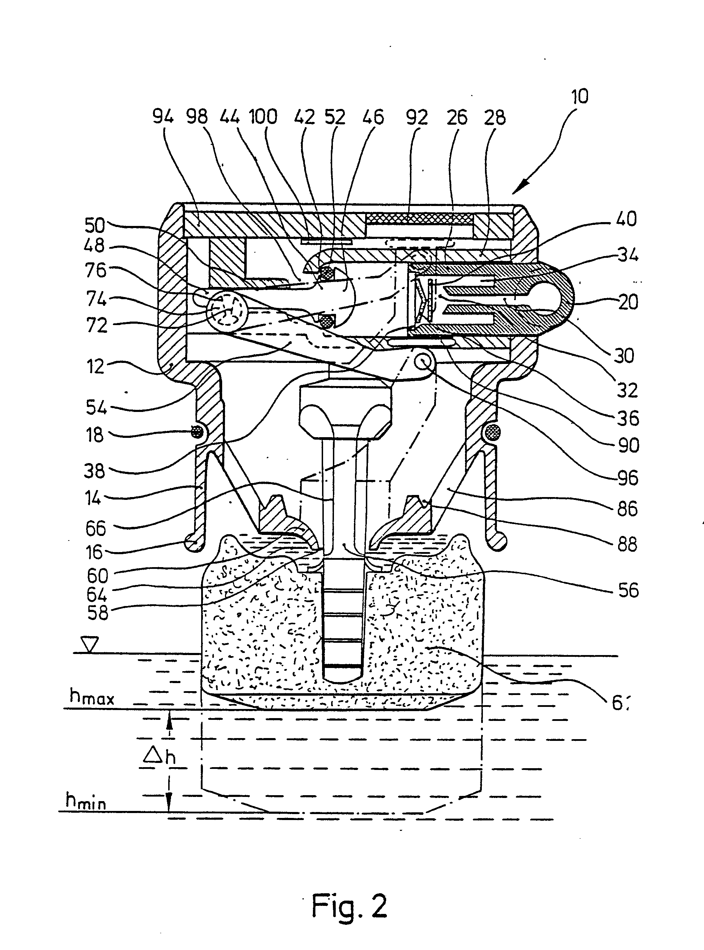

Wie die Figuren 1 und 2 zeigen, besteht die Vorrichtung zum automatischen Einfüllen von Wasser in Batteriezellen gemäss der Erfindung aus einem Einfüllstopfen 10, dessen Stopfengehäuse 12 in die Nachfüllöffnung der nicht gezeigten Batteriezelle eingesetzt werden kann. Der untere Rand des Stopfengehäuses 12 ist als federnde Zunge 14 ausgebildet, deren untere Enden nach aussen weisende Vorsprünge 16 haben, die nach dem Einsetzen des Stopfengehäuses 12 die Unterkante der Nachfüllöffnung elastisch hintergreifen. Zur Abdichtung zwischen der Nachfüllöffnung und dem Mantel des Stopfengehäuses 12 ist ein O-Ring 18 vorgesehen, der in eine Nut des Stopfengehäuses 12 eingesetzt ist. Über dem O-Ring 18 ist das Stopfengehäuse 12 nach aussen auskragend erweitert und liegt mit diesem Teil auf der Zellenoberfläche auf.

Aus Fig. 1 ist zu ersehen, dass für die Wasserzuführung von einem nicht gezeigten Vorratsbehälter durch Druck am Stopfengehäuse 12 ein T-förmiger Anschlussstutzen 20 vorgesehen ist, der zwei Anschlussnippel 22 und 24 hat, auf die in bekannter Weise Wasserschläuche aufgesteckt werden können. Der Anschlussnippel 22 dient zur Zuführung von chemisch reinem Wasser, während der Anschlussnippel 24 das zugeführte und nicht in den dargestellten Einfüllstopfen 10 abgeleitete Wasser zum nächsten Einfüllstopfen weiterleitet.

Aus Fig. 2 geht hervor, dass der Fuss des T-förmigen Anschlussstutzens 20 in ein Einlassrohrstück 28 eingesetzt ist. In den Fuss 26 ist ein Drosselkanal 30 eingearbeitet, der beim dargestellten Ausführungsbeispiel eine Länge von 14 mm und einen Durchmesser von 0,9 mm hat. Der Kanalausgang 32 des Drosselkanals 30 ist trompetenförmig erweitert. Um den Drosselkanal 30 herum ist in dem Fuss 26 ein ringförmiger Schmutzsammelraum 34 ausgebildet.

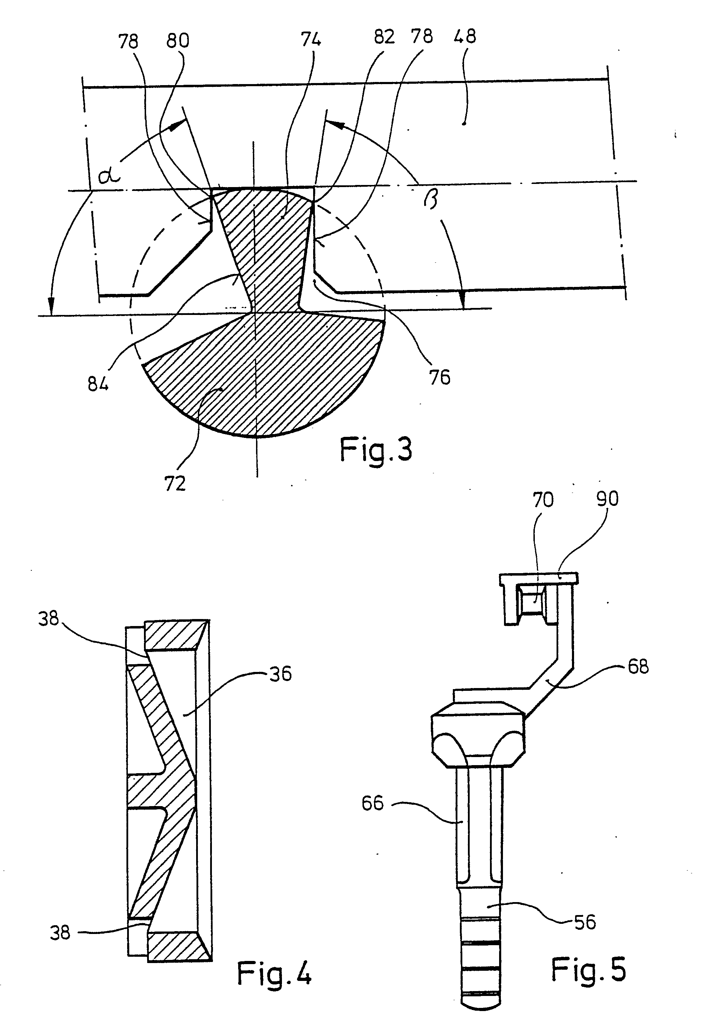

Wie Fig. 2 ferner zeigt, ist in Strömungsrichtung gesehen hinter dem Kanalausgang 32 eine in Fig. 4 dargestellte, konische Prallplatte 36 vorgesehen, die im Klemmsitz in einer Aussparung des Fusses 26 befestigt ist. Die Prallplatte 36 hat an ihrem Aussenumfang vier Durchlassschlitze 38.

Zwischen den Kanalausgang 32 und die Prallplatte 36 ist eine Filterscheibe 40 eingesetzt.

Das Einlassrohrstück 28 hat ungefähr im mittleren Bereich eine konische Sitzfläche 42 für den Ventilkopf 44 eines Ventils 46, dessen Ventilkörperschaft 48 in Richtung des horizontalen Doppelpfeiles verschiebbar in der sich an die Sitzfläche anschliessenden, engeren Bohrung 50 des Einlassrohrstückes 28 gelagert ist. In den Ventilkopf 44 ist eine umlaufende Nut eingearbeitet, die zur Aufnahme eines O-Ringes 52 dient, der sich in der Schliessstellung des Ventils 46 dichtend an die konische Sitzfläche 42 anlegt, welche einen Winkel von 120° bildet.

Der Ventilkörperschaft 48 ist über einen Verstärkungshebel 54 mit einer Führungsstange 56 verbunden, die zentrisch in dem Stopfengehäuse 12 gelagert ist und durch eine kreisförmige Öffnung 58 im Boden 60 des Stopfengehäuses 12 aus diesem herausragt. Auf das untere Ende der Führungsstange 56 ist ein Schwimmer 62 aufgesetzt.

Der verhältnismässig grossvolumige Schwimmer 62 ist aus einem sehr leichten Kunststoff hergestellt, beispielsweise Styropor. Das Volumen ist bei dem dargestellten Ausführungsbeispiel so gross bemessen, dass der auf die Führungsstange 56 wirkende Auftrieb etwa 15 Gramm beträgt. In die Oberseite des Schwimmers 62 ist ein tellerförmiger Raum 64 eingearbeitet, der zur Aufnahme von Wasser dient.

In den Mittelteil der Führungsstange 56, welcher in der durch die Öffnung 58 des Bodens 60 gebildeten, nahezu linienförmigen Gleitführung verschieblich ist, sind vier Längsnuten 66 etwa viertelkreisförmigen Querschnittes eingearbeitet. Diese Längsnuten 66 haben den doppelten Zweck, das aus dem Stopfengehäuse 12 kommende Wasser in die Batteriezellen abzuleiten und die Führung an der Öffnung 58 klemmungsfrei zu halten, so dass sich dort keine Fremdkörper ablagern können. Der an der Führungsstange 56 gebildete Wasserfilm hält dabei die Führung immer leichtgängig.

Wie Fig. 5 zeigt, geht das verdickte, obere Ende der Führungsstange 56 in einen Arm 68 über, an dem mit Hilfe eines Bolzens 70 der Verstärkungshebel 54 gelagert ist. Zur Übertragung der vertikalen Schwimmerbewegung auf den horizontal verschiebbaren Ventilkörper 46 ist am gegenüberliegenden Ende des Verstärkungshebels 54 eine Welle 72 befestigt, die im Stopfengehäuse 12 gelagert ist. Diese Welle 72 hat zumindest im Bereich des Ventilkörperschaftes 48 ein Zahnsegment 74, das in eine Aussparung 76 des Ventilkörperschaftes 48 eingreift. Wie Fig. 3 zeigt, ist die Aussparung 76 durch zwei vertikale Wände 78 begrenzt, an denen je eine Kante 80 und 82 des Zahnsegmentes 74 anliegt, das von der Wellenmitte nach aussen hin breiter wird. Die Kante 80 des Zahnsegmentes 74 verschiebt den Ventilkörper 46 bei einer Drehung der Welle 72 im Gegenuhrzeigersinn in die Schliessstellung und liegt in einer Radialebene 84, die in der Öffnungsstellung des Ventilkörpers 46 vertikal steht, während sie, wie in Fig. 3 eingezeichnet ist, in dessen Schliessstellung mit der durch den Wellenmittelpunkt verlaufenden Horizontalebene einen Winkel $\alpha$ von 71° bildet. Daraus geht hervor, dass sich die Welle 72 von der Öffnungsstellung in die Schliessstellung und umgekehrt um 19° dreht.

Fig. 3 zeigt ferner, dass die Kante 82 des Zahnsegmentes 74, die den Ventilkörper 46 bei einer Drehung der Welle 72 im Uhrzeigersinn in die Öffnungsstellung schiebt, in einer Radialebene der Welle 72 liegt, die in der Schliessstellung des Ventilkörpers 46 mit der durch den Wellenmittelpunkt verlaufenden Horizontalebene einen Winkel $\beta$ von 59° bildet. Daraus folgt, dass bei der soeben erwähnten Drehung der Welle 72 um 19° der Winkel $\beta$ in der Öffnungsstellung des Ventilkörpers 46 40° beträgt.

Bei dem dargestellten Ausführungsbeispiel beträgt die Breite des Zahnsegmentes 74 und der Aussparung 76 1,3 mm, während die Höhe der Aussparung 76 1,25 mm beträgt; die Höhe des Zahnsegmentes 74 ist 1,5 mm.

In den Boden des Stopfengehäuses 12 sind feine, sternförmige Durchbrüche 86 eingearbeitet, die auf der Bodenoberseite abgerundet sind und im radial äusseren Teil in einen ringförmigen Schmutzsammelraum 88 münden. An der Bodenunterseite sind die Durchbrüche 86 scharfkantig begrenzt und damit abweisend gegen das Rückströmen von Wasser oder Schwebeteilchen gestaltet.

Am oberen Ende der Führungsstange 56, genauer am oberen Ende des Armes 68, ist eine Anzeigescheibe 90 befestigt, die in der obersten Stellung des Schwimmers 62, d.h. bei geschlossenem Ventil, durch ein Fenster 92 im Deckel 94 des Stopfengehäuses 12 sichtbar ist.

Die Vorrichtung arbeitet in der folgenden Weise:

Wenn der Schwimmer 62 aufgrund eines zu niedrigen Elektrolytspiegels abgesunken ist — seine tiefste Stellung ist in Fig. 2 mit $h_{min}$ und seine höchste Stellung mit $h_{max}$ bezeichnet, wobei der Hub des Schwimmers 62 $\Delta h$ sehr gross ist und im Ausführungsbeispiel 11 mm beträgt —, wird der Verstärkungshebel 54, der im Ausführungsbeispiel eine wirksame Länge von 24 mm hat, über das leichtgängige Drehgelenk 96 im Uhrzeigersinn gedreht, so dass sich dadurch auch die Welle 72 im Uhrzeigersinn dreht und die Kante 82 des Zahnsegmentes 74 den Ventilkörper 46 nach rechts in seine Öffnungsstellung bewegt. Aufgrund der beschriebenen Übersetzung von der Führungsstange 56 über den Verstärkungshebel 54 auf den Ventilkörper 46 wird ein Übersetzungsverhältnis 1 : 16 erreicht.

Durch den T-förmigen Anschlussstutzen 20 dringt das von einem Druckbehälter durch die nicht dargestellte Leitung zugeführte Wasser mit einem Druck von etwa 1,5 bis 2,0 bar ein und wird in dem Drosselkanal 30 gedrosselt. Der trompetenförmige Kanalausgang 32 sorgt für eine Geschwindigkeitsverringerung, während die folgende Filterscheibe 40 Schwebestoffe und Verunreinigungen zurückhält, die in den Schmutzsammelraum 34 gespült werden. Durch die Prallplatte 36 wird das Wasser zu den vier Durchlassschlitzen 38 geleitet, von wo aus es an die Innenwand des Einlaufrohrstückes 28 gelangt und nicht direkt gegen die Oberfläche des Ventilkopfes 44 drückt. Anschliessend gelangt das Wasser durch eine grosse Öffnung 98 im oberen Teil des Einlassrohrstückes 28 hinter der Sitzfläche 42 für das Ventil unter den Deckel 94, wo es etwa tangential unter das Fenster 92 gelangt.

Von hier aus strömt das Wasser im Stopfengehäuse 12 nach unten, wobei ein Teil an der Führungsstange 56 entlang durch die Öffnung 58 abfliesst, während der Rest durch die Durchbrüche 86 fliesst, welche dabei von möglicherweise eingedrungenen Schwebestoffen gereinigt werden. Der Strömungsverlauf ist in Fig. 1 durch Pfeile angedeutet.

Wenn nach Erreichen des erforderlichen Elektrolytspiegels der Schwimmer seine Stellung bei $h_{max}$ erreicht hat, ist der Verstärkungshebel in der Zwischenzeit im Gegenuhrzeigersinn gedreht worden, so dass die linke Kante 80 des Zahnsegmentes 74 den Ventilkörperschaft 48 nach links gedrückt und dadurch das Ventil geschlossen hat.

Durch die beschriebene und dargestellte Form des Zahnsegmentes 74 und dessen Zusammenwirken mit den vertikalen Wänden 78 der Aussparung 76 im Ventilkörperschaft 48 wird sichergestellt, dass das Ventil in der geöffneten Stellung auch dann offengehalten wird, wenn das zuströmende Wasser schlagartig einschiesst. Aufgrund der begrenzten, sehr kleinen horizontalen Bewegung des Zahnsegmentes 74 in der Aussparung 76 ist ein sicheres Schliessen des Ventils ohne jede Verklemmung möglich.

Beim Füllvorgang hat sich die Anzeigescheibe 90 zu dem Fenster 92 hin bewegt, so dass sowohl die Füllung als auch ein zu niedriger Elektrolytspiegel, bei dem die Anzeigescheibe 90 nicht sichtbar ist, kontrolliert werden können. Das bei jedem Füllvorgang einströmende Wasser hält das Fenster 92 von Verschmutzungen frei.

Im Betrieb der Batterie, d.h. während des Fahrens des Fahrzeuges, Gabelstaplers oder dergleichen, schwankt der Elektrolytspiegel ständig und sorgt dadurch für ein «Trimmen» des Systems. Hierdurch werden Ablagerungen am Drehgelenk 96, an dem Zahnsegment 74 und in den Führungen bei der Öffnung 58 verhindert, wobei der lange Hub des Schwimmers 62 äusserst vorteilhaft ist.

Zur Entlüftung der Vorrichtung sind in das Stopfengehäuse 12 Entlüftungsschlitze 100 eingearbeitet.

## Patentansprüche

1. Vorrichtung zum automatischen Einfüllen von Wasser in Batteriezellen mit einem in die Zelle einsetzbaren Einfüllstopfen (10), der einen Anschlussstutzen (20) für die Wasserzuführung sowie ein von einem Schwimmer (62) betätigtes Ventil aufweist, dessen Ventilkörper (46) über einen schwenkbar gelagerten Hebel mit dem zentrisch im Stopfengehäuse (12) angeordneten Schwimmer (62) verbunden ist, wobei der Schwimmer (62) an einer zentrischen Führungsstange (58) befestigt ist, die zur alleinigen Gleitführung des Schwimmers (62) mit Führungsspiel in einer zentrisch in den trichterförmig geneigten Boden (60) des Stopfengehäuses (12) eingearbeiteten Öffnung (58) vertikal verschiebbar ist und die an ihrem oberen Ende gelenkig mit dem als Verstärkungshebel (54) ausgebildeten Hebel zur Übetragung der Schwimmerbewegung auf den Ventilkörper (46) verbunden ist.

2. Vorrichtung nach Anspruch 1, dadurch gekennzeichnet, dass das Übersetzungsverhältnis von Führungsstange (56) zum Verstärkungshebel (54) in der Grössenordnung 1 : 16 liegt.

3. Vorrichtung nach Anspruch 1 oder 2, dadurch gekennzeichnet, dass zur Kraftübertragung vom Verstärkungshebel (54) auf den Ventilkörper (46) am Verstärkungshebel (54) eine im Stopfengehäuse (12) gelagerte Welle (72) befestigt ist, die mit einem Zahnsegment (74) in eine Aussparung (76) des Ventilkörperschaftes (48) eingreift.

4. Vorrichtung nach Anspruch 3, dadurch gekennzeichnet, dass die Aussparung (76) des im wesentlichen horizontal beweglichen Ventilkörperschaftes (48) durch zwei vertikale Wände (78) begrenzt ist, an denen je eine Kante (80, 82) des von der Wellenmitte nach aussen breiter werdenden Zahnsegmentes (74) anliegt.

5. Vorrichtung nach Anspruch 4, dadurch gekennzeichnet, dass die den Ventilkörper (46) in Schliessstellung verschiebende Kante (80) des Zahnsegmentes (74) in einer Radialebene (84) der Welle (72) liegt, die in Öffnungsstellung des Ventilkörpers (46) vertikal steht, während sie in Schliessstellung einen Winkel ($\alpha$) von etwa 70°, vorzugsweise 71° mit der durch den Wellenmittelpunkt verlaufenden Horizontalebene bildet.

6. Vorrichtung nach Anspruch 4 oder 5, dadurch gekennzeichnet, dass die den Ventilkörper (46) in Öffnungsstellung verschiebende Kante (82) des Zahnsegmentes (74) in einer Ebene der Welle liegt, die in Öffnungsstellung des Ventilkörpers (46) einen Winkel ($\beta$) von etwa 40° und in Schliessstellung einen Winkel ($\beta$) von etwa 60°, vorzugsweise 59° mit der durch den Wellenmittelpunkt verlaufenden Horizontalebene bildet.

7. Vorrichtung nach einem der vorhergehenden Ansprüche, dadurch gekennzeichnet, dass der Ventilkörper (46) in einem zylindrischen Einlassrohrstück (28) des Stopfengehäuses (12) angeordnet ist, das eine konische Sitzfläche (42) für den Ventilkopf (44) aufweist, an der dieser in Schliessstellung mittels eines O-Ringes (52) dichtend anliegt.

8. Vorrichtung nach Anspruch 7, dadurch gekennzeichnet, dass die konische Sitzfläche (42) einen Winkel von 120° bildet.

9. Vorrichtung nach Anspruch 7 oder 8, dadurch gekennzeichnet, dass in das Einlassrohrstück (28) ein Drosselkanal (30) für die Wasserzuführung eingearbeitet ist.

10. Vorrichtung nach Anspruch 9, dadurch gekennzeichnet, dass zwischen dem Kanalausgang (32) und dem Ventilkopf (44) eine das auftreffende Wasser zur Wand des Einlassrohrstückes (28) ablenkende Prallplatte (36) liegt.

11. Vorrichtung nach Anspruch 10, dadurch gekennzeichnet, dass zwischen den Kanalausgang (32) und die Prallplatte (36) ein Filter (40) eingesetzt ist.

12. Vorrichtung nach einem der Ansprüche 9 bis 11, dadurch gekennzeichnet, dass der Kanalausgang (32) trompetenförmig erweitert ist.

13. Vorrichtung nach einem der Ansprüche 9 bis 12, dadurch gekennzeichnet, dass um den Drosselkanal (30) herum ein Schmutzsammelraum (34) vorgesehen ist.

14. Vorrichtung nach einem der vorhergehenden Ansprüche, dadurch gekennzeichnet, dass in die Führungsstange (56) des Schwimmers (62) Längsnuten (66) eingearbeitet sind.

15. Vorrichtung nach einem der vorhergehenden Ansprüche, dadurch gekennzeichnet, dass der aus einem leichten Kunststoff hergestellte, grossvolumige Schwimmer (62) an seiner Oberseite einen tellerförmigen Raum (64) zur Aufnahme von Wasser aufweist.

16. Vorrichtung nach einem der vorhergehenden Ansprüche, dadurch gekennzeichnet, dass am oberen Ende der Führungsstange (56) des Schwimmers (62) eine Anzeigescheibe (90) befestigt ist, die bei geschlossenem Ventil durch ein Fenster (92) im Deckel (94) des Stopfengehäuses (12) sichtbar ist.

17. Vorrichtung nach einem der vorhergehenden Ansprüche, dadurch gekennzeichnet, dass in den Boden (60) des Stopfengehäuses (12) feine, vorzugsweise sternförmige Durchbrüche (86) eingearbeitet sind, die auf der Bodenoberseite wenigstens teilweise in Schmutzsammelräume (88) münden und die an der Bodenunterseite scharfkantig begrenzt sind.

**Claims**

1. Device for the automatic filling of battery cells with water comprising a filling cup (10) to be inserted into the cell and provided with a connection hose (20) for the water supply and with a valve actuated by a float (62), the valve body (46) being connected by means of a pivoted lever with the float (62) which is disposed in the center of the housing (12) of said cup (10), wherein the float (62) is fixed to a centric guide rod (58) which is vertically movable and guided in a central opening (58) in the conical bottom (60) of said housing (12) for guiding the movement of said float (62), and wherein said lever is an amplifying lever (54) hingedly secured to the upper end of the guide rod (58) for transmitting the float movement to the valve body (46).

2. A device as claimed in claim 1, wherein the transmission ratio of the guide rod (56) to the amplifying lever (54) is about 1 : 16.

3. A device as claimed in claim 1 or 2, wherein for the power transmission from the amplifying lever (54) to the valve body (46) a shaft (72) is mounted in the cup housing (12), said shaft (72) being attached to the amplifying lever (54) and having a toothed segment (74) which seats in a notch (76) provided in the valve shaft (48).

4. A device as claimed in claim 3, wherein the valve shaft (48) is mainly horizontally movable and the notch (76) in the valve shaft (48) is defined by two vertical walls (78), the edges (80, 82) of the toothed segment (74) resting on said walls (78), said toothed segment (74) widening outwards from the center of the shaft (72).

5. A device as claimed in claim 4, wherein the edge (80) of the toothed segment (74) which moves the valve body (46) into its closed position lies in a radial plane (84) of the shaft (72) which extends vertically in the open position of the valve and in the closed position forms an angle ($\alpha$) of approximately 70° and preferably 71° with the horizontal plane passing through the shaft center.

6. A device as claimed in claim 4 or 5, wherein the edge (82) of the toothed segment (74) which moves the valve body (46) into its open position lies in a plane of the shaft (72) which forms in the open position of the valve an angle ($\beta$) of approximately 40° with the horizontal plane passing through the shaft center and in the closed position an angle ($\beta$) of approximately 60°, preferably 59°.

7. A device as claimed in any one of the preceding claims, wherein the valve body (46) is disposed in a cylindrical inlet pipe (28) of the cup housing (12), said inlet pipe (28) having a conical seat (42) for the valve head (44), a gasket (52) being disposed at the valve head (44) which rests on said seat (42) in closed position.

8. A device as claimed in claim 7, wherein the conical seat (42) defines an angle of approximately 120°.

9. A device as claimed in claim 7 or 8, wherein a throttle tube (30) is secured in the inlet pipe (28), the throttle tube (30) being adapted for connection to the water supply.

10. A device as claimed in claim 9, wherein a baffle plate (36) is disposed between the tube exit (32) and the valve head (44) for deflecting the impact of the incoming water jet towards the wall of the inlet pipe (28).

11. A device as claimed in claim 10, wherein a filter (40) is disposed between the tube exit (32) and the baffle plate (36).

12. A device as claimed in any one of claims 9 to 11, wherein the tube exit (32) is trumpet shaped.

13. A device as claimed in any one of claims 9 to 12, wherein a dirt collecting chamber (34) is disposed around the throttle tube (30).

14. A device as claimed in any one of the preceding claims, wherein a plurality of longitudinal grooves (66) are provided in the guide rod (56) of the float (62).

15. A device as claimed in any one of the preceding claims, wherein the voluminous float (62) is comprised of lightweight plastic and is provided with a dish-shaped recess (64) on its upper surface for receiving water.

16. A device as claimed in any one of the preceding claims, wherein an indication disk (90) is fixed to the upper end of the guide rod (56) of the float (62) and wherein a window (72) is provided in the top (94) of the cup housing (12), the disk (90) being visible through the window (72) when the valve is closed.

17. A device as claimed in any one of the preceding claims, wherein a plurality of narrow slots (86) are provided in the bottom (60) of the cup housing (12), one or more of said slots (86) on the upper side of the bottom surface leading to dirt collecting chambers (88), said slots (86) being sharp-edged on the lower side of the bottom surface.

**Revendications**

1. Dispositif pour le remplissage automatique en eau d'éléments de batterie, comportant un bouchon de remplissage pouvant être enfoncé dans l'élément (10) et qui présente un raccord (20) pour l'alimentation d'eau ainsi qu'une soupape actionnée par une flotteur (62), soupape dont le corps (46) est relié, par l'intermédiaire d'un levier monté pivotant, au flotteur (62) disposé au centre du carter du bouchon (12), ledit flotteur (62) étant fixé sur une tringle de guidage centrale (58) qui peut être déplacée verticalement avec un certain jeu, dans un orifice (58) pratiqué au centre du fond (60), incliné à la manière d'une trémie, du carter du bouchon (12), et qui, sur son extrémité supérieure est articulée sur le levier conformé en levier de renfort (54), afin de transmettre le mouvement du flotteur au corps de soupape (46).

2. Dispositif selon la revendication 1, caractérisé par la fait que le rapport de transmission entre la tringle de guidage (56) et le levier de renfort (54) est de l'ordre de grandeur de 1 : 16.

3. Dispositif selon la revendication 1 ou 2, caractérisé par le fait que pour la transmission des forces du levier de renfort (54) au corps de soupape (46) il est prévu sur le levier de renfort (54) un arbre (72) monté dans le carter du bouchon (12), qui, à l'aide d'un segment denté (74) vient en prise avec un évidement (76) de la tige (48) du corps de soupape.

4. Dispositif selon la revendication 3, caractérisé par le fait que l'évidement (76) de la tige (48) du corps de soupape mobile dans un plan sensiblement horizontal est délimité par deux parois verticales (78) sur chacune desquelles s'appuie respectivement une arête (80, 82) du segment denté (74) qui s'élargit du centre de l'arbre vers l'extérieur.

5. Dispositif selon la revendication 4, caractérisé par le fait que l'arête (80) du segment denté (74), qui déplace le corps de soupape (46) en position de fermeture est située dans un plan radial (84) de l'arbre (72) qui, en position d'ouverture du corps de soupape (46) est placé verticalement, tandis qu'en position de fermeture, ladite arête (80) forme un angle ($\alpha$) d'environ 70°, de préférence 71°, avec le plan horizontal passant par le centre de l'arbre.

6. Dispositif selon la revendication 4 ou 5, caractérisé par le fait que l'arête (82) du segment denté (74) qui déplace le corps de soupape (46) en position d'ouverture est située dans un plan de l'arbre qui, en position d'ouverture du corps de soupape (46), forme un angle ($\beta$) d'environ 40° et, en position de fermeture un angle ($\beta$) d'environ 60°, de préférence 59° avec le plan horizontal passant par le centre de l'arbre.

7. Dispositif selon l'une des revendications précédentes, caractérisé par le fait que le corps de soupape (46) est disposé dans une pièce tubulaire d'introduction (28) du carter du bouchon (12), pièce tubulaire (28) qui présente une surface d'assise (42) pour la tête de la soupape (44) sur laquelle cette tête adhère de manière étanche en position de fermeture au moyen d'un joint torique (52).

8. Dispositif selon la revendication 7, caractérisé par le fait que la surface d'assise conique (42) forme un angle de 120°.

9. Dispositif selon la revendication 7 ou 8, caractérisé par le fait que dans la pièce tubulaire (28) a été pratiqué un canal (30) permettant de régler le débit de l'alimentation d'eau.

10. Dispositif selon la revendication 9, caractérisé par le fait qu'entre la sortie (32) du canal et la tête de soupape (44) est placée une plaque de chicane (36) qui dévie l'eau arrivant sur la paroi vers la pièce tubulaire (28).

11. Dispositif selon la revendication 10, caractérisé par le fait qu'entre la sortie (32) du canal et la plaque de chicane (36) est placé un filtre (40).

12. Dispositif selon l'une des revendications 9 à 11, caractérisé par le fait que la sortie (32) du canal est élargie en forme de trompette.

13. Dispositif selon l'une des revendications 9 à 12, caractérisé par le fait qu'autour du canal (30) de réglage du débit est prévu un espace (34) pour la collecte des salissures.

14. Dispositif selon l'une des revendications précédentes, caractérisé par le fait que dans la tringle de guidage (56) du flotteur (62) ont été pratiquées des rainures longitudinales (66).

15. Dispositif selon l'une quelconque des revendications précédentes, caractérisé par le fait que le flotteur (62) très volumineux, fabriqué en matière plastiques légère, présente sur son coté supérieur un espace (64) en forme de plateau destiné à recevoir l'eau.

16. Dispositif selon l'une quelconques des revendications précédentes, caractérisé par le fait que sur le côté supérieur de la tringle de guidage (56) du flotteur (62) est fixée une rondelle indicatrice (90) qui est visible par une fenêtre (92) pratiquée dans le couvercle (94) du carter du bouchon (12) lorsque la soupape est fermée.

17. Dispositif selon l'une quelconque des revendications précédentes, caractérisé par le fait que dans le fond (60) du carter du bouchon (12) sont pratiquées de fines perforations, de préférence en forme d'étoile, qui débouchent sur le côté supérieur du fond, au moins partiellement dans des espaces (88) destinés à la collecte des salissures et qui sont délimitées par des arêtes vives du côté inférieur du fond.

Fig.1

0 083 358

Fig. 2

11

Fig.3

Fig.4

Fig.5